Europäisches Patentamt

(19) European Patent Office

Office européen des brevets

(11) Veröffentlichungsnummer: **0 076 277**
**B1**

(12) **EUROPÄISCHE PATENTSCHRIFT**

(45) Veröffentlichungstag der Patentschrift:
23.01.85

(51) Int. Cl.⁴: **F 16 B 13/08**

(21) Anmeldenummer: **82900952.1**

(22) Anmeldetag: **23.03.82**

(86) Internationale Anmeldenummer:
**PCT/EP 82/00061**

(87) Internationale Veröffentlichungsnummer:
**WO 82/03664 (28.10.82 Gazette 82/26)**

(54) **FORMSCHLÜSSIG SETZBARER DÜBEL.**

(30) Priorität: **14.04.81 DE 3115040**

(43) Veröffentlichungstag der Anmeldung:
**13.04.83 Patentblatt 83/15**

(45) Bekanntmachung des Hinweises auf die Patenterteilung:
**23.01.85 Patentblatt 85/4**

(84) Benannte Vertragsstaaten:
**AT BE CH FR GB LI NL SE**

(56) Entgegenhaltungen:
**keine**

(73) Patentinhaber: **Liebig, Heinrich, Wormser Strasse 23, D-6102 Pfungstadt (DE)**

(72) Erfinder: **Liebig, Heinrich, Wormser Strasse 23, D-6102 Pfungstadt (DE)**

(74) Vertreter: **Helber, Friedrich G., Dipl.-Ing. et al, Patentanwälte Dipl.-Ing. F. G. Helber Dipl.-Ing. J.K. Zenz Glesser Weg 47, D-6144 Zwingenberg (DE)**

**Beschreibung**

Die Erfindung betrifft einen in einer mit einer radial umlaufenden Hinterschnittfläche versehenen Bohrung formschlüssig setzbaren Dübel mit einem dem Durchmesser der Bohrung im wesentlichen entsprechenden und in die Bohrung einführbaren Dübelkörper in Form eines am bohrungsinneren Ende eines an seinem äußeren Ende mit einem Schraubenkopf oder einer aufgeschraubten Mutter versehenen langgestreckten Befestigungsbolzens angeordneten Kopfstücks relativ geringer Höhe, auf dem die bohrungsinneren Enden von zu einer den Befestigungsbolzen umschließenden, dickwandigen, zylindrischen Hülse zusammengeschlossenen Riegelelementen aufsitzen, deren zur Bohrungsmündung weisende Enden von einer innerhalb des Durchmessers der Bohrung liegenden Lage in eine Lage verschwenkbar sind, in welcher sie zumindest teilweise über den Durchmesser des Dübelkörpers vorstehen und die Hinterschnittfläche der Bohrung verriegelnd hintergreifen, und mit einem zwischen die zur Bohrungsmündung weisenden Enden der Riegelelemente eingreifenden, sich zum Bohrungsinnern konisch verjüngenden Bauteil, der bei einer Verschiebung des Kopfstücks in Richtung zur Bohrungsmündung die rückwärtigen Enden der Riegelelemente zwangsläufig nach außen verschwenkt, wobei zwischen dem längsverschieblich auf dem Befestigungsbolzen angeordneten, sich konisch verjüngenden Bauteil und dem Schraubenkopf bzw. der Mutter wenigstens eine in Bolzenlängsrichtung verschiebliche Hülse und eine durch axiale Zusammendrückung unter Vorspannung setzbare Schraubenfeder angeordnet ist, deren Vorspannung durch ein auf dem zur Bohrungsmündung weisenden Endbereich der Riegelelemente angeordnetes, ringförmiges Spannelement mit einem bohrungsmündungsseitig über das Durchmessermaß der zugehörigen Bohrung vortretenden Abschnitt fixiert ist.

Das die Riegelelemente gegen vorzeitige Aufspreizung infolge der Vorspannung der Feder sichernde Spannelement ist bei dem so ausgebildeten bekannten Dübel (DE-A-2 906 914) ein dünner Metallring, von dem mehrere radial nach außen umgekantete Lappen vorspringen, die beim Einschieben des Dübels in eine zugehörige Bohrung an der Oberfläche des zu befestigenden Werkstücks bzw. der mit der Bohrung versehenen Wand anstoßen und bei fortgesetztem Einschiebevorgang das Spannelement von den Riegelelementen abstreifen, wobei sich das Spannelement also selbsttätig, ohne besondere Manipulationen löst.

Der Erfindung liegt die Aufgabe zugrunde, dieses Spannelement bei noch verbilligter Herstellung in seiner Funktion zu verbessern und insbesondere sicherzustellen, daß es sich nur beim Setzen des Dübels, nicht aber bereits beim Transport oder der sonstigen Handhabung des Dübels von den Riegelelementen herabschiebt und der von der Feder vorgespannte, sich konisch verjüngende Bauteil die Riegelelemente dann bereits außerhalb der zugehörigen Bohrung aufspreizt.

Erfindungsgemäß wird diese Aufgabe dadurch gelöst, daß das ringförmige Spannelement die Form einer Kunststoffhülse mit einem von deren bohrungsmündungsseitigen Ende einstückig, radial über das Durchmessermaß der zugehörigen Bohrung nach außen vorspringenden, umlaufenden, ebenen Ringflansch und wenigstens einen, vorzugsweise mehreren in gleichmäßigen Winkelabständen verteilt, vom bohrungsmündungsseitigen Hülsenende einstückig, radial einwärts vorspringenden, sich am konischen Abschnitt des sich verjüngenden Bauteils abstützenden, dünnen, umbiegbaren Lappen hat. Die so ausgebildete Kunststoffhülse ist im Spritzgußverfahren sehr preiswert herstellbar und die radial einwärts vorspringenden und sich am konischen Abschnitt des sich verjüngenden Bauteils abstützenden Lappen bilden eine Sicherung gegen ungewolltes Herunterschieben der Hülse von den Riegelelementen, und zwar in beiden Richtungen, d. h. sowohl zur Bohrungsmündung als auch in Richtung ins Bohrungsinnere. Erst wenn beim Setzen des Dübels dessen Vorderende so weit in die Bohrung eingeschoben ist, daß der radial nach außen vorspringende Ringflansch der Kunststoffhülse an der Oberfläche des zu befestigenden Werkstücks bzw. der mit der Bohrung versehenen Wand zur Anlage kommt und der Dübel dann mit erhöhter Kraft weiter in die Bohrung geschoben wird, schiebt sich die Hülse einerseits von den Riegelelementen herab und andererseits biegt der sich verjüngende, konische Bauteil die radial einwärts gerichteten Lappen um, so daß dann der Dübel ganz in die Bohrung eingeschoben werden kann, bis die in der Regel unter dem Schraubenkopf bzw. der Mutter des Befestigungsbolzens angeordnete Unterlegscheibe auf der Außenfläche des Ringflanschs der Kunststoffhülse aufliegt. Eine Freigabe der Riegelelemente erfolgt also erst innerhalb der Bohrung, wenn nämlich die rückwärtigen Kanten der Riegelelemente aus dem ins Bohrungsinnere weisenden Ende der bis zur Anlage ihres Ringflanschs an die Oberfläche des Untergrunds bzw. Werkstücks in die Bohrung eingeschobenen Kunststoffhülse austreten. Ein vorzeitiges Öffnen der Riegelelemente außerhalb der Bohrung ist also ausgeschlossen.

Der an den Ringflansch anschließende, zylindrische Teil der Kunststoffhülse liegt innerhalb der Bohrung des Werkstücks bzw. der Wand und zentriert das äußere Dübelende, was bei Scherlast eine vorzeitige Seitenverschiebung verhindert. Gleichzeitig kann sie eine gewisse Stoßisolierung übernehmen und auch bei der Befestigung von Werkstücken aus einem Metall mit abweichendem elektrischem Potential gegenüber dem Metall der Teile des Dübels, d. h. in der Regel Stahl oder Stahllegierungen, ist die Kunststoffhülse zweckmäßig, weil Lokalelementenbildung und hieraus resultierende elektrochemische Korrosion vermieden wird. Durch die beim Anziehen der Mutter bzw. Einschrauben des Schraubenkopfs auf den Randflansch des Spannelementes ausgeübte Pressung ergibt sich außerdem eine Dichtung zwischen der Unterlegscheibe und der Anschlußkonstruktion bzw. der Unterlegscheibe und der Befestigungswand.

Die Erfindung ist in der folgenden Beschreibung eines Ausführungsbeispiels in Verbindung mit der Zeichnung näher erläutert, und zwar zeigt

Fig. 1 eine Schnittansicht durch einen Wandabschnitt mit einer Hinterschnittbohrung mit einem teilweise im Längsmittelschnitt dargestellten erfindungsgemäßen Dübel in noch unverriegeltem Zustand, unmittelbar bevor dessen Riegelelemente durch die Spannung der Feder in die Eingriffsstellung mit der Hinterschnittfläche ausgeschwenkt werden, wobei die Verriegelungsstellung der Riegelelemente strichpunktiert angedeutet ist;

Fig. 2 eine Teilschnittansicht des Vorderendes des in Fig. 1 gezeigten Dübels zu Beginn des Einsetzvorgangs in eine zugehörige Bohrung;

Fig. 3 eine Draufsicht auf die die Riegelelemente des erfindungsgemäßen Dübels gegen ungewolltes Aufschwenken in die Verriegelungsstellung haltenden Kunststoffhülse; und

Fig. 4 eine Schnittansicht, gesehen in Richtung der Pfeile 4-4 in Fig. 3.

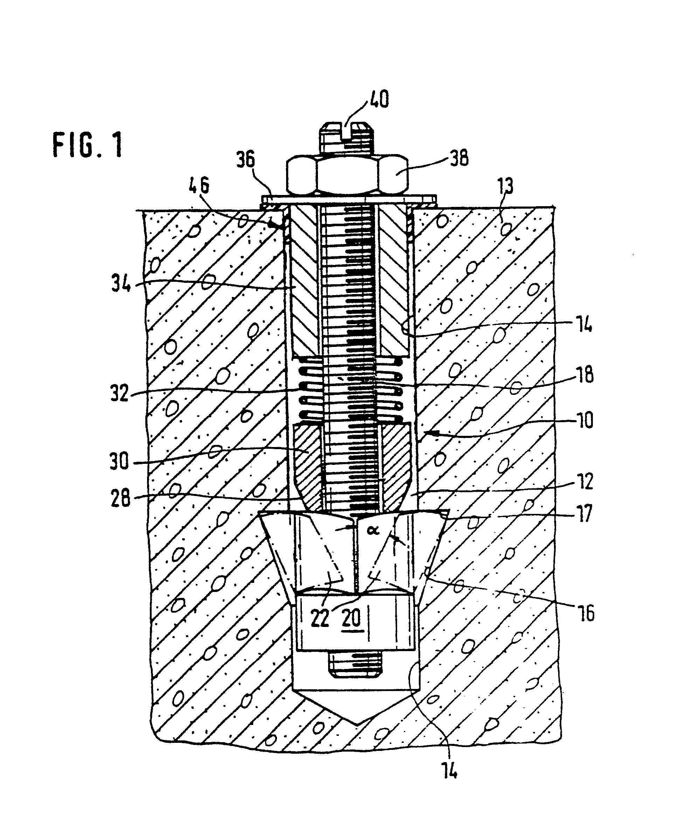

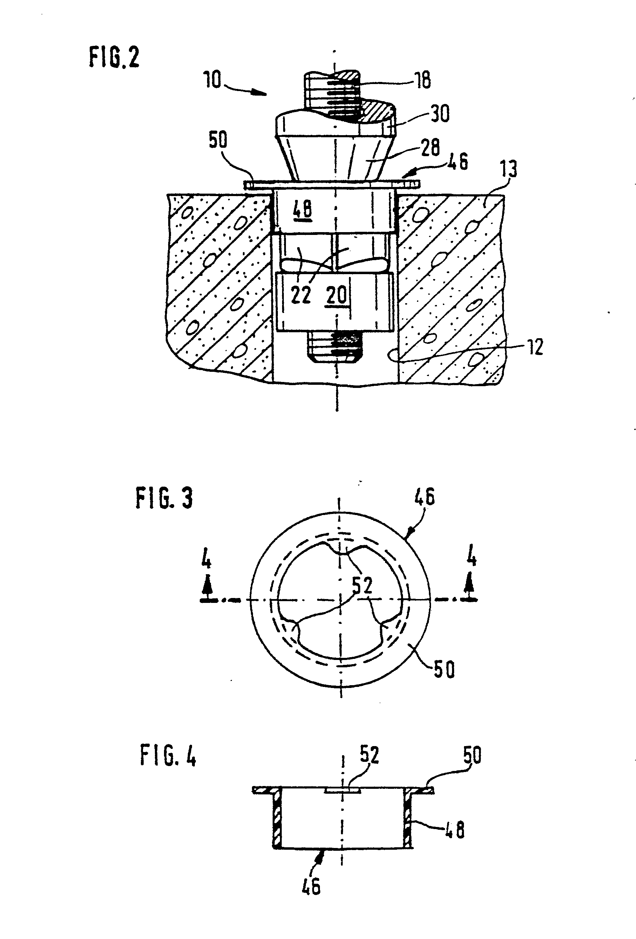

Der in Fig. 1 und — teilweise — in Fig. 2 gezeigte, in seiner Gesamtheit mit 10 bezeichnete erfindungsgemäße Dübel soll formschlüssig in einer Bohrung 12 in einem Untergrund 13, z. B. einer Betonwand, gesetzt — d. h. verriegelt — werden, die sich aus einer zylindrischen Vorbohrung 14 und einer mit Abstand von der Mündung der Bohrung vorgesehenen Erweiterungsbohrung 16 mit einer rückwärts zur Bohrungsmündung gewandten Hinterschnittfläche 17 zusammensetzt. Der Dübel 10 weist einen langgestreckten, im gezeigten Fall ein durchgehendes Gewinde tragenden Befestigungsbolzen 18 auf, auf dessen bohrungsinnerem Ende ein im Durchmesser nur geringfügig kleiner als der Durchmesser der Vorbohrung 14 bemessenes Kopfstück 20 aufgeschraubt ist. Der Befestigungsbolzen 18 ist also durch Drehen in das Kopfstück hinein- und aus ihm herausschraubbar. Auf der rückwärts, d. h. zur Bohrungsmündung gewandten Stirnfläche des Kopfstücks 20 sind drei Riegelelemente 22 in gleichmäßigem Winkelabstand um den Befestigungsbolzen herum verteilt abgestützt, die zusammengenommen die Form einer dickwandigen Hülse haben, die aber durch drei in Längsrichtung verlaufende Axialschnitte in drei Riegelelemente 22 unterteilt ist.

Die Riegelelemente 22 sind in ihrer Dicke so bemessen, daß die in der Einführlage von ihnen gebildete Hülse einen etwas kleineren Durchmesser als die Bohrung hat, d. h. ihr Durchmesser entspricht etwa dem Durchmesser des Kopfstücks 20. Im Anschluß an die Riegelelemente 22 ist ein sich zum Bohrungsinnern hin konisch verjüngender und mit dem verjüngten Ende 28 zwischen die Riegelelemente 22 greifender hülsenförmiger Bauteil 30 längsverschieblich auf dem Befestigungsbolzen 18 angeordnet. Auf der rückwärtigen Stirnfläche des Bauteils 30 ist eine durch axiale Zusammendrückung vorgespannte Schraubenfeder 32 angeordnet, deren bohrungsmündungsseitiges Ende an der bohrungsinneren Stirnfläche einer wiederum längsverschieblich auf dem Befestigungsbolzen 18 angeordneten weiteren Hülse 34 abgestützt ist. Das äußere Ende der Hülse 34 wird über eine zwischengelegte Unterlegscheibe 36 an einer auf den Befestigungsbolzen aufgeschraubten Mutter 38 abgestützt, wobei mit einem in einen in der äußeren Stirnfläche des Befestigungsbolzens 18 vorgesehenen Schraubenzieherschlitz 40 eingesetzten Schraubenzieher das Mitdrehen des Befestigungsbolzens beim Anziehen oder Lockern der Mutter 38 verhindert werden kann. Die zwischen der Mutter 38 und der Hülse 34 vorgesehene Unterlegscheibe 42 überträgt die beim Anziehen der Mutter 38 nach der Verriegelung der Riegelelemente 22 an der Hinterschnittfläche 17 erzeugte Einspannkraft auf die Oberfläche eines zu befestigenden Werkstücks.

Anstelle der Mutter 38 kann am Ende des Befestigungsbolzens 18 auch ein Schraubenkopf angestaucht sein, bei dessen Drehung sich der Befestigungsbolzen 18 in das Kopfstück 20 einschraubt.

Das Aufschwenken der Riegelelemente 22 in die — in Fig. 1 strichpunktiert angedeutete — Verriegelungsstellung durch den unter Vorspannung der Feder 32 zwischen die Riegelelemente gedrängten verjüngten Abschnitt 28 des Bauteils 30 wird außerhalb der Bohrung 12 durch das in den Fig. 3 und 4 gesondert dargestellte Spannelement 46 in Form einer Kunststoffhülse 48 verhindert, die bei der Montage des Dübels 10 passend über die mündungsseitigen Enden der eingeschwenkten Riegelelemente aufgeschoben ist. Ein am bohrungsmündungsseitigen Ende der Hülse 48 einstückig angespritzter, radial über das Durchmessermaß einer zugehörigen Bohrung 12 nach außen vorspringender, umlaufender, ebener Ringflansch 50 streift das Spannelement 46 beim Einführen in die Bohrung 12 von den Riegelelementen 22 ab, so daß die Riegelelemente beim weiteren axialen Einschieben des Dübels nach Überfahren der Hinterschnittfläche 17 mit ihrem rückwärtigen Ende automatisch in die Verriegelungslage aufgeschwenkt werden.

Das Spannelement 46 verbleibt dabei am bohrungsmündungsseitigen Ende des Dübels, wobei der Ringflansch 50 auf der Oberfläche des Untergrunds 13 bzw. eines mit dem Dübel gehaltenen Werkstücks aufliegt, während die Kunststoffhülse 48 das äußere Dübelende in der Bohrung 12 zentriert.

Um zu verhindern, daß das Spannelement 46 versehentlich bereits vor dem Setzen des Dübels 10 in einer Bohrung 12 von den Riegelelementen abgestreift wird, sind am bohrungsmündungsseitigen Ende der Hülse 48 zusätzlich drei radial einwärts vorspringende, dünne Lappen 52 (Fig. 3 und 4) angespritzt, welche die rückwärts zur Bohrungsmündung weisenden Stirnflächen der *Riegelelemente 22 übergreifen und sich mit ihren* freien Enden am verjüngten Abschnitt 28 des Bauteils 30 abstützen. Bei der normalen Handhabung des Dübels genügt der Widerstand der Lappen 52 gegen Umbiegung, um ein versehentliches Abstreifen des Spannelements 46 von den Riegelelementen 22 zu verhindern. Wird dagegen bei der Montage des Dübels nach dem Aufsetzen des Ringflanschs 50 auf der Oberfläche des Untergrunds bzw. des Werkstücks vorübergehend ein erhöhter Axialdruck in Einschubrichtung ausgeübt, werden die Lappen 52 vom konischen Abschnitt 28 zunehmend nach rückwärts umgebogen, bis sie an der Innenfläche der Hülse 48 anliegen und dann der Bauteil 30 ebenso wie die Feder 32 und die Hülse 34 durch die Hülse hindurchgeschoben werden können.

Es ist ersichtlich, daß im Rahmen des Erfindungsgedankens Abwandlungen und Weiterbildungen des vorbeschriebenen Ausführungsbeispiels verwirklichbar sind. Solche Abwandlungen können sich beispielsweise auf die Anzahl und die Form der Lappen 52 des in der Zeichnung gezeigten und vorstehend beschriebenen Spannelements 46 beziehen. Anstelle der beschriebenen drei Lappen 52 können auch eine größere oder geringere Anzahl von umbiegbaren Lappen vorgesehen sein. Im äußersten Fall kann auch ein einziger Lappen genügen, während andererseits auch vorstellbar ist, daß ein einziger, umlaufender, die Mündung der Hülse 48 verengender, filmartig dünner Ringflansch vorgesehen ist, der durch den beim Setzen des Dübels ausgeübten Axialdruck radial aufbricht. Auch an der Innenfläche der Umfangswandung der Kunststoffhülse vorgesehene Lamellen können eine ungewollte Verschiebung des Spannelements verhindern.

## Patentansprüche

1. In einer mit einer radial umlaufenden Hinterschnittfläche (17) versehenen Bohrung (12) formschlüssig setzbarer Dübel (10), mit einem dem Durchmesser der Bohrung im wesentlichen entsprechenden und in die Bohrung einführbaren Dübelkörper in Form eines am bohrungsinneren Ende eines, an seinem äußeren Ende mit einem Schraubenkopf oder einer aufgeschraubten Mutter (38) versehenen, langgestreckten Befestigungsbolzens (18) angeordneten Kopfstücks (20) relativ geringer Höhe, auf dem die bohrungsinneren Enden von zu einer den Befestigungsbolzen umschließenden, dickwandigen, zylindrischen Hülse zusammengeschlossenen Riegelelementen (22) aufsitzen, deren zur Bohrungsmündung weisende Enden von einer innerhalb des Durchmessers der Bohrung liegenden Lage in eine Lage verschwenkbar sind, in welcher sie zumindest teilweise über den Durchmesser des Dübelkörpers vorstehen und die Hinterschnittfläche der Bohrung verriegelnd hintergreifen, und mit einem zwischen die zur Bohrungsmündung weisenden Enden der Riegelele*mente eingreifenden, sich zum Bohrungsinnern* konisch verjüngenden Bauteil (30), der bei einer Verschiebung des Kopfstücks in Richtung zur Bohrungsmündung die rückwärtigen Enden der Riegelelemente zwangsläufig nach außen verschwenkt, wobei zwischen dem längsverschieblich auf dem Befestigungsbolzen angeordneten, sich konisch verjüngenden Bauteil und dem Schraubenkopf bzw. der Mutter wenigstens eine in Bolzenlängsrichtung verschiebliche Hülse (34) und eine durch axiale Zusammendrückung unter Vorspannung setzbare Schraubenfeder (32) angeordnet ist, deren Vorspannung durch ein auf dem zur Bohrungsmündung weisenden Endbereich der Riegelelemente angeordnetes, ringförmiges Spannelement (46) mit einem bohrungsmündungsseitig über das Durchmessermaß der zugehörigen Bohrung vortretenden Abschnitt fixiert ist, dadurch gekennzeichnet, daß das ringförmige Spannelement (46) die Form einer Kunststoffhülse (48) mit einem von deren bohrungsmündungsseitigen Ende einstückig, radial über das Durchmessermaß der zugehörigen Bohrung nach außen vorspringenden, umlaufenden, ebenen Ringflansch (50) und wenigstens einem, vorzugsweise mehreren in gleichmäßigen Winkelabständen verteilt, vom bohrungsmündungsseitigen Hülsenende einstückig, radial einwärts vorspringenden, sich am konischen Abschnitt (28) des sich verjüngenden Bauteils (30) abstützenden, dünnen, umbiegbaren Lappen (52) hat.

2. Dübel nach Anspruch 1, dadurch gekennzeichnet, daß das Spannelement (46) mit einer der Zahl der Riegelelemente (22) entsprechenden Zahl von radial einwärts vorspringenden, umbiegbaren Lappen (52) versehen ist.

## Claims

1. An expansion anchoring pad adapted to be set interlockingly in a bore (12) provided with a radially circumferential undercut surface (17), having a pad body corresponding substantially to the diameter of the bore, which can be inserted into the bore, in the form of an end piece (20) of relatively short length disposed on the bore-internal end of an elongated mounting bolt (18) provided on its outer end with a screw head or a threaded-on nut (38), on which [bolt] are seated the bore-internal ends of locking elements (22) closed together to form a thick-walled cylindrical barrel around the mounting bolt, while their ends pointing toward the bore mouth can be swung from a position lying within the diameter of the bore to a position in which they project at least partially beyond the diameter of the pad body and lockingly hook the undercut surface of the bore, and having a component (30) conically tapering toward the bore interior and engaging between the locking element ends pointing towards the bore mouth, which upon a displacement of the end piece in the direction of the bore mouth positively turn the rearward ends of the locking elements outwardly, while between the conically tapering component disposed for longitudinal displacement on the mounting bolt and the screw head or nut, as the case may be, at least one sleeve (34) displaceable in the bolt length direction and one helical spring (32) which can be biased by axial compression are disposed, the bias of the spring being fixed by an annular clasping element (46) which is disposed on the end portion of the locking elements that points toward the bore mouth, and which has a section projecting on the bore mouth side beyond the diametric dimension of the corresponding bore, characterised in that the annular clasping element (46) has the form of a palstic sleeve (48) with a planar circumferential annular flange (50) projecting outwardly integrally from its bore-mouth-side and radially beyond the diametric dimension of the corresponding bore and at least one, preferably several, thin, bendable tabs (52) projecting integrally radially inwardly at uniform angular intervals from the sleeve end on the bore mouth side and resting on the conical section (28) of the tapering component (30).

2. Anchoring pad according to claim 1, characterized in that the clasping element (46) is provided with a number of radially inwardly projecting bendable tabs (52) corresponding to the number of the locking elements (22).

**Revendications**

1. Cheville (10) pouvant être mise en place par emboîtement dans un trou (12) présentant une surface en contre-dépouille (17), s'étendant radialement, avec un corps de cheville correspondant sensiblement au diamètre du trou et pouvant y être introduit, corps de cheville ayant la forme d'une tête (20) de hauteur relativement faible, située à l'extrémité, intérieure au trou, d'un boulon de fixation (18) allongé et muni, à son extrémité extérieure, d'une tête de vis ou d'un écrou vissé (38), et sur laquelle reposent les extrémités, intérieures au trou, d'éléments de verrouillage (22) réunis pour former une douille cylindrique, à paroi épaisse, entourant le boulon de fixation, éléments de verrouillage dont les extrémités orientées vers l'orifice du trou peuvent basculer en passant d'une position située à l'intérieur du diamètre du trou à une position dans laquelle ils dépassent, au moins partiellement, le diamètre du corps de cheville et dans laquelle ils assurent le verrouillage en s'engageant contre la surface en contre-dépouille du trou, cheville comprenant également une pièce (30) allant en se rétrécissant de façon conique vers l'intérieur du trou et s'engageant entre les extrémités, orientées vers l'orifice du trou, des éléments de verrouillage, pièce (30) qui fait basculer de force vers l'extérieur, les extrémités arrière des éléments de verrouillage, lors d'un déplacement de la tête en direction de l'orifice de trou, et, entre la pièce (30) allant en se rétrécissant de façon conique, et montée coulissant longitudinalement sur le boulon de fixation, et la tête vissée ou l'écrou, se trouve au moins un manchon (34) déplaçable dans la direction longitudinale du boulon de fixation et un ressort hélicoïdal (32) que l'on peut précontraindre par compression axiale, et dont la précontrainte est fixée par un élément de serrage (46) de forme annulaire, disposé sur la zone terminale des éléments de verrouillage qui est tournée vers l'orifice de trou, élément de serrage muni d'une section qui déborde, côté orifice de trou, la cote de diamètre du trou correspondant, cheville, caractérisée par le fait que l'élément de serrage (46) annulaire a la forme d'une douille en matière plastique (48) possédant une bride annulaire (50) plate, faisant le tour en dépassant vers l'extérieur et radialement la cote de diamètre du trou correspondant, et d'une seule pièce avec son extrémité, côté orifice de trou, et possédant au moins une, et de préférence plusieurs languettes (52) flexibles, minces, s'appuyant sur la section conique (28) de la pièce (30) qui va en se rétrécissant, ces languettes faisant saillie radialement vers l'intérieur, d'une seule pièce avec l'extrémité de douille côté orifice du trou, et réparties à des intervalles angulaires réguliers.

2. Cheville selon la revendication 1, caractérisée par le fait que l'élément de serrage (46) est muni de languettes (52) flexibles, faisant saillie radialement vers l'intérieur et dont le nombre correspond au nombre des éléments de verrouillage (22).

FIG. 1

**FIG.2**

**FIG. 3**

**FIG. 4**